# EUROPEAN PATENT APPLICATION

(11) **EP 4 578 747 A1**
(43) Date of publication of application: **02.07.2025**
(21) Application number: 24180966.4
(22) Date of filing: 10.06.2024
(51) Int. Cl.: B60T 7/04, B60T 13/14, B60T 13/66, B60T 13/68, B60T 13/74

(54) **BRAKE APPARATUS FOR VEHICLE**

(30) Priority: 26.12.2023 KR 20230191417
(71) Applicant: HYUNDAI MOBIS CO., LTD., Seoul 06141 (KR)
(72) Inventor: AHN, Sung Ki, Yongin-si, Gyeonggi-do 16891 (KR); SEO, Eu Dong, Yongin-si, Gyeonggi-do 16891 (KR); NA, Seung Hyeop, Yongin-si, Gyeonggi-do 16891 (KR)
(74) Representative: Frenkel, Matthias Alexander

(57) **Abstract**

A brake apparatus (1) includes a pedal part (10) capable of being pressurized, a master cylinder part (20) in which pressure of oil is amplified by the pedal part, a storage part (30) that is connected to the master cylinder part and in which oil is temporarily stored, a main braking part (40) connected to the master cylinder part and supplied with oil therefrom, connected to some of a plurality of wheel cylinder parts (100), and configured to supply oil for braking to some of the plurality of wheel cylinder parts, and an auxiliary braking part (50) configured to connect the main braking part and remaining wheel cylinder parts of the plurality of wheel cylinder parts, connected to the storage part, and configured to amplify pressure of oil by self-driving when an error occurs in the main braking part.

## Description

### BACKGROUND

### FIELD

Exemplary embodiments of the present disclosure relate to a brake apparatus for a vehicle, and more particularly, to a brake apparatus for a vehicle, which can prevent an accident in an autonomous vehicle because auxiliary braking is performed when an error occurs in main braking.

### DISCUSSION OF THE BACKGROUND

In general, in a hydraulic brake apparatus, when a driver steps on a pedal, the pressure of oil is amplified through a master cylinder. The amplified pressure of the oil is supplied to each wheel, so that a braking force is generated. Furthermore, braking pressure is provided to each wheel by the pressure of oil that is generated by the driving of a motor.

In such a hydraulic brake apparatus, a motor pump and various types of valves are mounted on a housing block in which a flow channel is formed. The hydraulic brake apparatus is connected to each wheel. The master cylinder is connected to a flow channel of the housing block through a hydraulic line.

However, in the conventional hydraulic brake apparatus, an accident may occur because auxiliary braking is not performed when an error occurs in main braking. In particular, an autonomous vehicle has a problem in that vehicle braking is impossible if the motor is not driven in main braking. Accordingly, there is a need for solving the problem.

The Background Technology of the present disclosure is disclosed in Korean Patent Application Publication No. 2007-0104982 (October 30, 2007) entitled "Control Apparatus For Valve In Electro-Hydraulic Brake System".

### SUMMARY

Various embodiments are directed to providing a brake apparatus for a vehicle, which can prevent an accident in an autonomous vehicle because auxiliary braking is performed when an error occurs in main braking.

In an embodiment, a brake apparatus for a vehicle may include a pedal part capable of being pressurized, a master cylinder part in which pressure of oil is amplified by the pedal part, a storage part that is connected to the master cylinder part and in which oil is temporarily stored, a main braking part connected to the master cylinder part and supplied with oil therefrom, connected to some of a plurality of wheel cylinder parts, and configured to supply oil for braking to some of the plurality of wheel cylinder parts, and an auxiliary braking part configured to connect the main braking part and remaining wheel cylinder parts of the plurality of wheel cylinder parts, connected to the storage part, and configured to amplify pressure of oil by self-driving when an error occurs in the main braking part.

The auxiliary braking part may include an auxiliary block part connected to the main braking part and the wheel cylinder part, an auxiliary electric part mounted on the auxiliary block part and driven when power is applied thereto, an auxiliary flow channel part formed in the auxiliary block part and configured to supply oil of the main braking part and the storage part to the auxiliary electric part, and a wheel flow channel part formed in the auxiliary block part and configured to provide the wheel cylinder part with oil that is discharged by the auxiliary electric part.

The auxiliary flow channel part may include a connection line part configured to connect the main braking part and the auxiliary electric part and to provide the oil that is supplied by the main braking part with guidance and a connection valve part formed in the connection line part and configured to adjust the amount of oil that passes through the connection line part by opening and closing the connection line part.

The auxiliary flow channel part may further include a reservoir connection part configured to connect the connection line part and the storage part.

The wheel flow channel part may include a wheel line part configured to connect the auxiliary electric part and the wheel cylinder part and a wheel valve part formed in the wheel line part and configured to adjust the amount of oil that passes through the wheel line part.

The wheel flow channel part may further include a decompression flow channel part configured to connect the auxiliary flow channel part and the wheel flow channel part and to decompress oil.

A pump port part on which the auxiliary electric part is mountable may be formed in the auxiliary block part. The connection valve part may be disposed over a first axis of the pump port part.

The connection valve parts may be disposed to be symmetrical to each other on the basis of a second axis of the pump port part.

A pump port part on which the auxiliary electric part is mountable may be formed in the auxiliary block part. The wheel valve part may be disposed under a first axis of the pump port part.

The wheel valve parts may be disposed to be symmetrical to each other on the basis of a second axis of the pump port part.

In the brake apparatus for a vehicle according to an embodiment of the present disclosure, when an error occurs in the main braking part, oil for braking can be supplied to the wheel cylinder part by the driving of the auxiliary braking part. At this time, the supply of oil to the main braking part can be blocked, and oil that has been stored in the storage part can be supplied.

### BRIEF DESCRIPTION OF THE DRAWINGS

FIG. 1 is a diagram schematically illustrating a brake apparatus for a vehicle according to an embodiment of the present disclosure.
FIG. 2 is a diagram schematically illustrating an auxiliary braking part according to an embodiment of the present disclosure.
FIG. 3 is a diagram schematically illustrating an auxiliary block part according to an embodiment of the present disclosure.
FIG. 4 is a diagram schematically illustrating the state in which a connection valve part has been mounted on the auxiliary block part according to an embodiment of the present disclosure.
FIG. 5 is an operation state diagram of the connection valve part according to an embodiment of the present disclosure.
FIG. 6 is a diagram schematically illustrating the state in which a wheel valve part has been mounted on the auxiliary block part according to an embodiment of the present disclosure.
FIG. 7 is an operation state diagram of the wheel valve part according to an embodiment of the present disclosure.

### DETAILED DESCRIPTION

Hereinafter, a brake apparatus for a vehicle according to an embodiment of the present disclosure will be described with reference to the accompanying drawings. In this process, the thicknesses of lines or the sizes of components illustrated in the drawings may have been exaggerated for the clarity of a description and for convenience' sake. Terms to be described below have been defined by taking into consideration their functions in the present disclosure, and may be changed depending on a user or operator's intention or practice. Accordingly, such terms should be defined based on the overall contents of this specification.

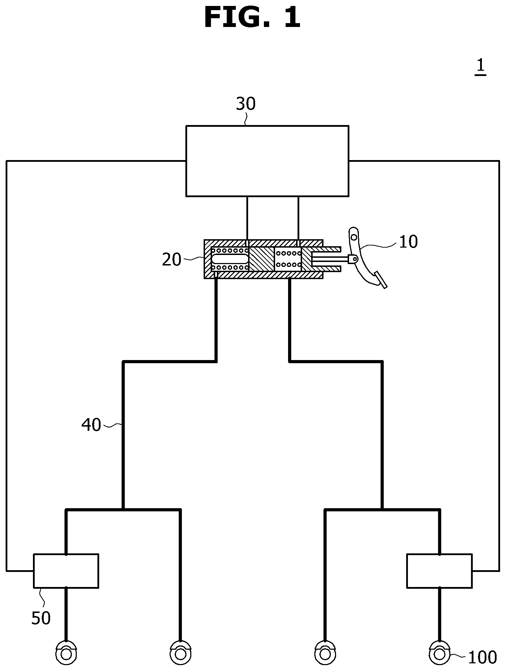

FIG. 1 is a diagram schematically illustrating a brake apparatus for a vehicle according to an embodiment of the present disclosure. Referring to FIG. 1, a brake apparatus 1 for a vehicle according to an embodiment of the present disclosure includes a pedal part 10, a master cylinder part 20, a storage part 30, a main braking part 40, and an auxiliary braking part 50.

The pedal part 10 may be pressurized. For example, the pedal part 10 may be disposed within a vehicle body, and may be stepped on by a driver while driving. In addition, in an autonomous driving mode, the pedal part 10 may be pressurized.

The pressure of oil within the master cylinder part 20 may be amplified by the pedal part 10. For example, the pressure of oil that has been stored in the master cylinder part 20 may be amplified as a cylinder in which two chambers have been formed is pressurized while operating in conjunction with the pedal part 10.

The storage part 30 may be connected to the master cylinder part 20, and may temporarily store oil. The storage part 30 may be connected to each of the partitioned chambers of the master cylinder part 20.

The main braking part 40 may be connected to the master cylinder part 20 and supplied with oil. The main braking part 40 may be connected to some of a plurality of wheel cylinder parts 100, and may provide the wheel cylinder part with oil for braking. For example, when oil having high pressure is supplied to the wheel cylinder part 100, a braking force may be generated in a front wheel or a rear wheel. The wheel cylinder part 100 may be mounted on each of two front wheels and two rear wheels. The main braking part 40 may provide oil to the wheel cylinder part 100 that is mounted on one front wheel and one rear wheel. In addition, the main braking part 40 may provide oil to the wheel cylinder part 100 that is mounted on two front wheels or two rear wheels.

The auxiliary braking part 50 may connect the main braking part 40 and the remaining wheel cylinder parts of the plurality of wheel cylinder parts 100, and may be connected to the storage part 30. The auxiliary braking part 50 may amplify the pressure of oil by self-driving when an error occurs in the main braking part 40.

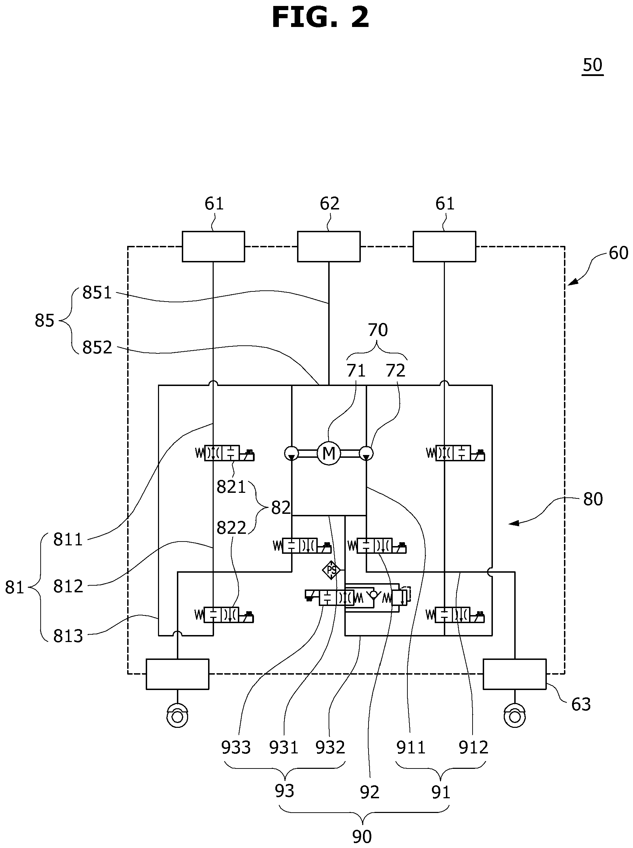

FIG. 2 is a diagram schematically illustrating the auxiliary braking part according to an embodiment of the present disclosure. Referring to FIG. 2, the auxiliary braking part 50 according to an embodiment of the present disclosure may include an auxiliary block part 60, an auxiliary electric part 70, an auxiliary flow channel part 80, and a wheel flow channel part 90.

The auxiliary block part 60 may be connected to the main braking part 40 and the wheel cylinder part 100. For example, the auxiliary block part 60 may be composed of a square block that is manufactured by an extrusion molding method and subjected to a cutting process and that is made of an aluminum alloy. The auxiliary block part 60 may be mounted on the vehicle body. A port may be formed in the auxiliary block part 60 by hole processing, so that the auxiliary block part 60 may form a space on which the auxiliary electric part 70 is mounted. A circuit that provides oil with guidance, such as the auxiliary flow channel part 80 or the wheel flow channel part 90, may be formed in the auxiliary block part 60.

The auxiliary electric part 70 may be mounted on the auxiliary block part 60 and driven when power is applied thereto. The auxiliary electric part 70 may include an auxiliary motor part 71 and an auxiliary pump part 72. When power is applied to the auxiliary motor part 71, the auxiliary pump parts 72 that are disposed on both sides of the auxiliary motor part 71 may be driven by eccentric driving, so that oil may be compressed and discharged.

The auxiliary flow channel part 80 may be formed in the auxiliary block part 60, and may supply oil of the main braking part 40 and the storage part 30 to the auxiliary electric part 70.

The wheel flow channel part 90 may be formed in the auxiliary block part 60, and may provide the wheel cylinder part 100 with oil that is discharged by the auxiliary electric part 70.

The auxiliary flow channel part 80 according to an embodiment of the present disclosure may include a connection line part 81 and a connection valve part 82.

The connection line part 81 may connect the main braking part 40 and the auxiliary electric part 70, and may provide oil that is supplied by the main braking part 40 with guidance. For example, one end of each of the pair of connection line parts 81 may be connected to each of a pair of first port parts 61 that is formed in the auxiliary block part 60. The first port part 61 may be connected to a hydraulic line of the main braking part 40.

The connection valve part 82 may be formed in the connection line part 81, and may adjust the amount of oil that passes through the connection line part 81 by opening and closing the connection line part 81. For example, when an error occurs in the main braking part 40, the connection valve part 82 may block the connection line part 81. Accordingly, the hydraulic line of the main braking part 40 and a hydraulic line of the auxiliary flow channel part 80 may be separated.

The connection valve part 82 may include an open and close valve part 821 and a decompression valve part 822. The open and close valve part 821 may connect or close a flow channel between the main braking part 40 and the auxiliary flow channel part 80. The decompression valve part 822 may induce oil that passes through the connection line part 81 to maintain set pressure.

The connection line part 81 may include a first line part 811 that connects the first port part 61 and the open and close valve part 821, a second line part 812 that connects the open and close valve part 821 and the decompression valve part 822, and a third line part 813 that connects the decompression valve part 822 and the auxiliary electric part 70.

The auxiliary flow channel part 80 according to an embodiment of the present disclosure may further include a reservoir connection part 85. The reservoir connection part 85 may connect the connection line part 81 and the storage part 30. For example, the reservoir connection part 85 may be connected to a second port part 62 that is formed in the auxiliary block part 60. Furthermore, a hydraulic line that provides oil of the storage part 30 with guidance may be connected to the second port part 62. The reservoir connection part 85 may include a first reservoir connection part 851 and a second reservoir connection part 852. One end of the first reservoir connection part 851 may be connected to the second port part 62. The second reservoir connection part 852 may be branched from the first reservoir connection part 851, and both ends of the second reservoir connection part 852 may be connected to the third line parts 813, respectively.

The wheel flow channel part 90 according to an embodiment of the present disclosure may include a wheel line part 91 and a wheel valve part 92.

The wheel line part 91 may connect the auxiliary electric part 70 and the wheel cylinder part 100. For example, the wheel line part 91 may have one end connected to the auxiliary electric part 70 and the other end connected to a third port part 63 formed in the auxiliary block part 60. The third port part 63 may be directly connected to the wheel cylinder part 100 through a hydraulic line.

The wheel valve part 92 may be formed in the wheel line part 91, and may adjust the amount of oil that passes through the wheel line part 91. For example, the wheel line part 91 may include a first wheel line part 911 having one end connected to the auxiliary electric part 70 and the other end connected to the wheel valve part 92 and a second wheel line part 912 having one end connected to the wheel valve part 92 and the other end connected to the third port part 63.

The wheel flow channel part 90 according to an embodiment of the present disclosure may further a decompression flow channel part 93. The decompression flow channel part 93 may connect the auxiliary flow channel part 80 and the wheel line part 91 and decompress oil. For example, the decompression flow channel part 93 may include a first decompression part 931, a second decompression part 932, and a third decompression part 933.

The first decompression part 931 may connect the pair of wheel line parts 91. For example, the first decompression part 931 may connect the first wheel line parts 911 each having one end connected to the auxiliary electric part 70 and the other end connected to the wheel valve part 92.

The second decompression part 932 may have one end connected to the first decompression part 931 and the other end connected to the connection line part 81. For example, the second decompression part 932 may be connected to any one of the pair of third line parts 813.

The third decompression part 933 may transmit or block oil depending on set pressure. For example, the third decompression part 933 may be disposed in the second decompression part 932, and may adjust the amount of passage of oil.

As each third decompression parts 933 is controlled, the auxiliary electric part 70 may be used in common. Furthermore, through control of the third decompression part 933, the connection and separation of oil through the second port part 62 are possible, and control of set pressure may be possible.

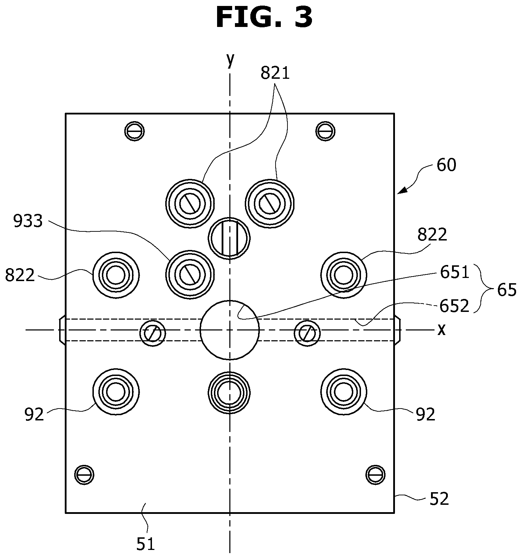

FIG. 3 is a diagram schematically illustrating the auxiliary block part according to an embodiment of the present disclosure. Referring to FIGS. 2 and 3, a pump port part 65 on which the auxiliary electric part 70 is mountable may be formed in the auxiliary block part 60 according to an embodiment of the present disclosure. The connection valve part 82 may be disposed over a first axis "x" of the pump port part 65. For example, the pump port part 65 may include a first pump port part 651 and a second pump port part 652. The first pump port part 651 may be formed on a first surface 51 that corresponds to a front surface or rear surface of the auxiliary block part 60. The auxiliary motor part 71 may be mounted on the first pump port part 651. The second pump port part 652 may be formed on a second surface 52 that corresponds to a side of the auxiliary block part 60. The auxiliary pump part 72 may be mounted on the second pump port part 652. The first axis "x" may mean a middle line of the second pump port parts 652 that are disposed on both sides of the first pump port part 651. When the connection valve part 82 is disposed over the first axis "x", the connection line part 81 may become close to the first port part 61 that is formed on a top surface of the auxiliary block part 60, so that the length of a hydraulic line can be minimized.

The connection valve parts 82 may be disposed to be symmetrical to each other on the basis of a second axis "y" of the pump port part 65. For example, the second axis "y" may be orthogonal to the first axis "x", and may mean a middle line of the first pump port part 651. When the connection valve parts 82 are disposed to be symmetrical to each other on the basis of the second axis "y", a design change range in the existing layout can be reduced.

The wheel valve part 92 may be disposed under the first axis "x". When the wheel valve part 92 is disposed under the first axis "x", the layout of a hydraulic line with the third port part 63 that is formed on a bottom surface of the auxiliary block part 60 can be optimized.

The wheel valve parts 92 may be disposed to be symmetrical to each other on the basis of the second axis "y" of the pump port part 65. When the wheel valve parts 92 are disposed to be symmetrical to each other on the basis of the second axis "y", a design change range in the existing layout can be reduced.

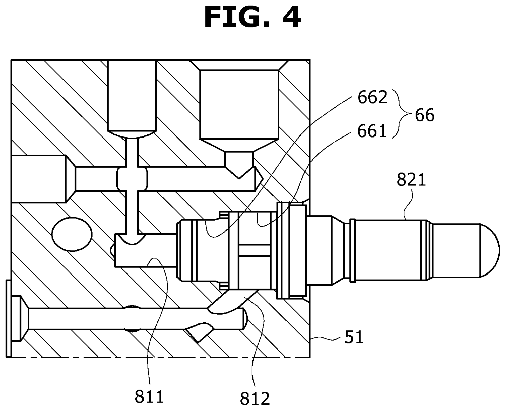

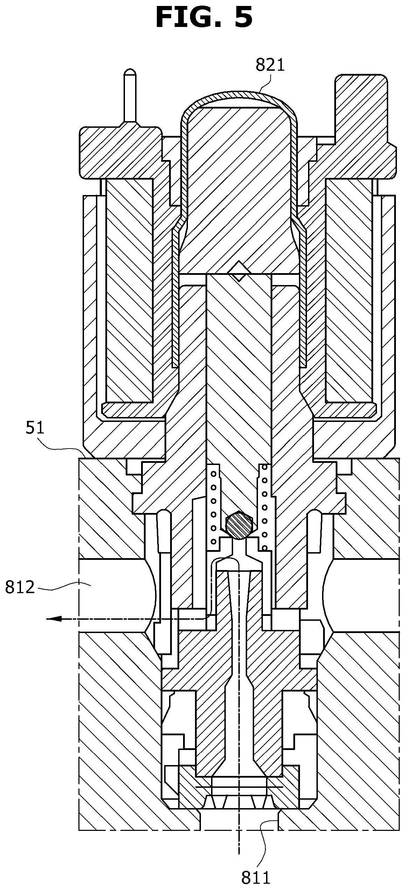

FIG. 4 is a diagram schematically illustrating the state in which the connection valve part has been mounted on the auxiliary block part according to an embodiment of the present disclosure. FIG. 5 is an operation state diagram of the connection valve part according to an embodiment of the present disclosure. Referring to FIGS. 4 and 5, a supply port part 66 may be formed in the auxiliary block part 60. The open and close valve part 821 of the connection valve part 82 may be mounted on the supply port part 66. The supply port part 66 may include a first supply port part 661 that forms a hole by being processed from the first surface 51 and a second supply port part 662 that is extended from the first supply port part 661. The first supply port part 661 may be connected to the second line part 812 of the connection line part 81. The second supply port part 662 may be connected to the first line part 811 of the connection line part 81. Accordingly, a control direction in which pressure that is generated by control of the auxiliary electric part 70, the wheel valve part 92, and the decompression flow channel part 93 is closed by an electromagnetic force of the open and close valve part 821 and a direction in which the pressure acts are identical with each other, which is advantageous for control and a product design. Furthermore, in a normal open state, resistance of a flow channel can be reduced because a direction in which a spring force acts to open the open and close valve part 821 and a direction in which oil introduced from the main braking part 40 passes are identical with each other.

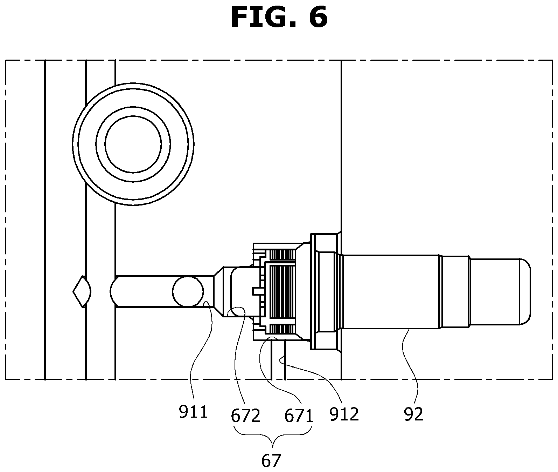

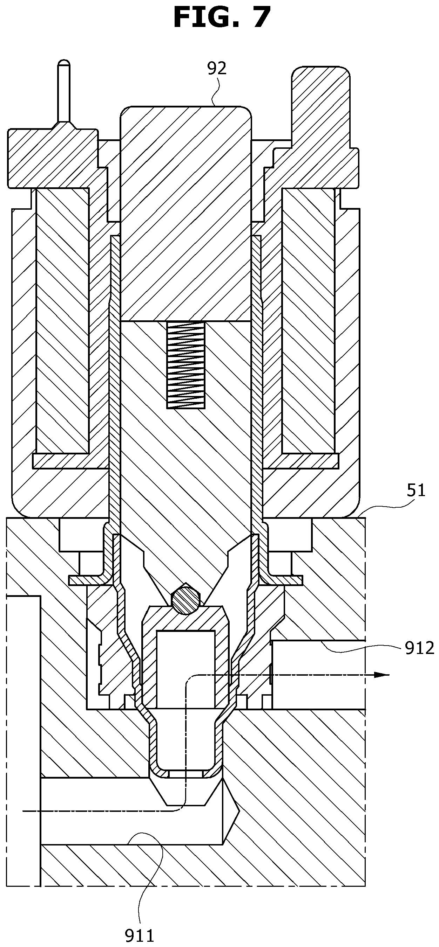

FIG. 6 is a diagram schematically illustrating the state in which the wheel valve part has been mounted on the auxiliary block part according to an embodiment of the present disclosure. FIG. 7 is an operation state diagram of the wheel valve part according to an embodiment of the present disclosure. Referring to FIGS. 6 and 7, a wheel port part 67 may be formed in the auxiliary block part 60. The wheel valve part 92 may be mounted on the wheel port part 67. The wheel port part 67 may include a first wheel port part 671 that forms a hole by being processed from the first surface 51 and a second wheel port part 672 that is extended from the first wheel port part 671. The first wheel port part 671 may be connected to the second wheel line part 912. The second wheel port part 672 may be connected to the first wheel line part 911. Accordingly, at normal times, a direction in which pressure acts and a direction in which a spring force for closing the valve acts are identical with each other, which is advantageous for control of the wheel valve part 92. Furthermore, a direction in which an electromagnetic force of the wheel valve part 92 acts when oil discharged from the auxiliary electric part 70 passes is identical, which is advantageous for control.

In the brake apparatus 1 for a vehicle according to an embodiment of the present disclosure, when an error occurs in the main braking part 40, oil for braking may be supplied to the wheel cylinder part 100 by the driving of the auxiliary braking part 50. At this time, the supply of oil to the main braking part 40 can be blocked, and oil that has been stored in the storage part 30 can be supplied.

Although embodiments of the disclosure have been disclosed for illustrative purposes, those skilled in the art will appreciate that various modifications, additions and substitutions are possible, without departing from the scope and spirit of the disclosure as defined in the accompanying claims. Thus, the true technical scope of the disclosure should be defined by the following claims.

## Claims

1. A brake apparatus for a vehicle, comprising:
a pedal part capable of being pressurized;
a master cylinder part in which pressure of oil is amplified by the pedal part;
a storage part that is connected to the master cylinder part and in which oil is temporarily stored;
a main braking part connected to the master cylinder part and supplied with oil therefrom, connected to some of a plurality of wheel cylinder parts, and configured to supply oil for braking to some of the plurality of wheel cylinder parts; and
an auxiliary braking part configured to connect the main braking part and remaining wheel cylinder parts of the plurality of wheel cylinder parts, connected to the storage part, and configured to amplify pressure of oil by self-driving when an error occurs in the main braking part.

2. The brake apparatus for the vehicle of claim 1, wherein the auxiliary braking part comprises:
an auxiliary block part connected to the main braking part and the wheel cylinder part;
an auxiliary electric part mounted on the auxiliary block part and driven when power is applied thereto;
an auxiliary flow channel part formed in the auxiliary block part and configured to supply oil of the main braking part and the storage part to the auxiliary electric part; and
a wheel flow channel part formed in the auxiliary block part and configured to provide the wheel cylinder part with oil that is discharged by the auxiliary electric part.

3. The brake apparatus for the vehicle of claim 2, wherein the auxiliary flow channel part comprises:
a connection line part configured to connect the main braking part and the auxiliary electric part and to provide the oil that is supplied by the main braking part with guidance; and
a connection valve part formed in the connection line part and configured to adjust an amount of oil that passes through the connection line part by opening and closing the connection line part.

4. The brake apparatus for the vehicle of claim 3, wherein the auxiliary flow channel part further comprises a reservoir connection part configured to connect the connection line part and the storage part.

5. The brake apparatus for the vehicle of any one of claims 2 to 4, wherein the wheel flow channel part comprises:
a wheel line part configured to connect the auxiliary electric part and the wheel cylinder part; and
a wheel valve part formed in the wheel line part and configured to adjust an amount of oil that passes through the wheel line part.

6. The brake apparatus for the vehicle of claim 5, wherein the wheel flow channel part further comprises a decompression flow channel part configured to connect the auxiliary flow channel part and the wheel flow channel part and to decompress oil.

7. The brake apparatus for the vehicle of any one of claims 3 to 6, wherein:
a pump port part on which the auxiliary electric part is mountable is formed in the auxiliary block part, and
the connection valve part is disposed over a first axis of the pump port part.

8. The brake apparatus for the vehicle of claim 7, wherein the connection valve parts are disposed to be symmetrical to each other on the basis of a second axis of the pump port part.

9. The brake apparatus for the vehicle of any one of claims 5 to 8, wherein:
a pump port part on which the auxiliary electric part is mountable is formed in the auxiliary block part, and
the wheel valve part is disposed under a first axis of the pump port part.

10. The brake apparatus for the vehicle of claim 9, wherein the wheel valve parts are disposed to be symmetrical to each other on the basis of a second axis of the pump port part.
